# EUROPÄISCHE PATENTSCHRIFT

(11) **EP 3 146 520 B1**
(45) Veröffentlichungstag und Bekanntmachung des Hinweises auf die Patenterteilung: **11.12.2019**
(21) Anmeldenummer: 15724192.8
(22) Anmeldetag: 11.05.2015
(51) Int. Cl.: G09C 1/10, H04L 9/06, H04L 9/08, H03K 19/177

(54) **PROGRAMMIERBARES LOGIKBAUELEMENT, SCHLÜSSELBILDUNGSSCHALTUNG UND VERFAHREN ZUR BEREITSTELLUNG EINER SICHERHEITSINFORMATION**
PROGRAMMABLE LOGIC DEVICE, KEY FORMING CIRCUIT, AND METHOD FOR PROVIDING A SECURITY INFORMATION
COMPOSANT LOGIQUE PROGRAMMABLE, CIRCUIT DE FORMATION DE CLÉ ET PROCÉDÉ DE FOURNITURE D'UNE INFORMATION DE SÉCURITÉ

(30) Priorität: 11.08.2014 DE 102014215898
(43) Veröffentlichungstag der Anmeldung: 29.03.2017
(73) Patentinhaber: Siemens Mobility GmbH, 81739 München (DE)
(72) Erfinder: FALK, Rainer, 85586 Poing (DE); MERLI, Dominik, 86609 Donauwörth (DE)
(86) Internationale Anmeldenummer: PCT/EP2015/060318
(87) Internationale Veröffentlichungsnummer: WO 2016/023650

(56) Entgegenhaltungen:
- DE-A1-102010 026 688
- US-A1- 2005 220 297
- US-A1- 2006 098 820
- US-A1- 2014 016 778

## Beschreibung

Die Erfindung betrifft ein programmierbares Logikbauelement, das derart programmiert ist eine Sicherheitsinformation, welche sich auf einen kryptographischen Schlüssel bezieht, zu erzeugen, eine entsprechende Schlüsselbildungsschaltung, ein entsprechendes Verfahren zur Bereitstellung einer Sicherheitsinformation auf einem programmierbaren Logikbauelement, und ein Computerprogrammprodukt.

Programmierbare Logikbauelemente werden heutzutage in vielen Rechnersystemen verwendet, um Funktionalitäten sehr schnell ausführen zu können und flexibel die Funktionalität bzw. einer zugrunde liegenden Verschaltung ändern oder anpassen zu können ohne dabei direkt die Hardware ändern zu müssen. Als logische Bauelemente sind insbesondere feldprogrammierbare Logikgatter-Anordnung, auch FPGA genannt, im Einsatz. Ein solches programmierbares Logikbauelement enthält unterschiedliche konfigurierbare Blöcke, wie Register, die durch Flip Flops realisiert werden, kombinatorische Logik, die durch Tabellen, sogenannte Look-Up-Tables, realisiert werden, Speicher, Eingangs-/Ausgangsblöcke, Taktgeber und weitere.

Ein solches programmierbares Logikbauelement kann mittels eines Bitstroms konfiguriert werden, d.h. durch den Bitstrom werden Schaltungen auf dem Logikbauelement eingerichtet. Die Bezeichnung Bitstrom wird in diesem Dokument mit der gleichen Bedeutung wie der englische Fachbegriff "Bitstream" verwendet. Üblicherweise wird ein Bitstrom beim Starten eines Systems, z.B. eines Rechnersystems, aus einem Speicherbaustein in das Logikbauelement geladen. Dieser wird abhängig von dem geladenen Bitstrom konfiguriert. Es sind jedoch auch Logikbausteine bekannt, welche ihre Konfigurationsdaten intern speichern. Dazu ist im Logikbauelement ein Konfigurationsspeicher vorgesehen, z.B. ein Flash-Speicher oder ein Antifuse-Speicher. Durch ein solches programmierbares Logikbauelement können auch kryptographische Berechnungen, z.B. symmetrische Verschlüsselungsverfahren, wie ein erweiterter Verschlüsselungsstandard AES, oder Einwegfunktionen, wie HMAC-SHA256, realisiert werden. Diese kryptographischen Verfahren benötigen als Parameter eine Sicherheitsinformation, insbesondere einen kryptographischen Schlüssel, der innerhalb des programmierbaren Logikbauelements verfügbar sein muss.

Die DE 10 2010 026688 A1 beschreibt ein Verfahren und einen Zufallsgenerator zur Erzeugung von Zufallsbits mit einer hohen Entropie. Der Zufallsgenerator besteht aus mindestens einem kaskadierten Ringoszillator, der aus zyklisch geschalteten Gattern bestehen kann und einer Abtasteinrichtung, welche Schaltzustände des kaskadierten Ringoszillators zur Erzeugung der Zufallsbits abtastet.

Die US 2014/016778 A1 beschreibt ein Verfahren und einen Zufallsbitstromgenerator zur Erzeugung eines fortlaufenden Schlüssels für eine Stromverschlüsselung oder zur Verwendung als Pseudozufallszahlengenerator.

Die US 2006/098820 A1 beschreibt ein Verfahren zur Erzeugung eines Schlüsselstroms. Dazu empfängt ein Schlüsselstromgenerator einen kontinuierlichen Eingangsbitstrom, der durch den Schlüsselbitstromgenerator zu einem kontinuierlichen ausgegebenen Ausgangsbitstrom verarbeitet.

Diese Sicherheitsinformation darf jedoch nicht während der Konfiguration aus dem Bitstrom mit einfachen Mitteln auslesbar sein, da ansonsten ein Angreifer einen basierend auf der Sicherheitsinformation bzw. dem kryptographischen Schlüssel verschlüsselten Datenstrom problemlos entschlüsseln kann.

Um ein Auslesen einer solchen kryptographischen Sicherheitsinformation zu verhindern, ist es bekannt, den Bitstrom selbst kryptographisch verschlüsselt auf das programmierbare Logikbauelement zu laden. Es existieren jedoch auch programmierbare Logikbauelemente, die verschlüsselte Bitströme nicht unterstützen. Auch ist eine solche Bitstromverschlüsselung, insbesondere bei manchen FPGA-Bausteinen durch einen Seitenkanalangriff brechbar. Auch ist bekannt, einen Bitstrom aus einem Logikbaustein mit internem Konfigurationsspeicher auszulesen. Ein Bitstrom kann dann mittels umgekehrtem Engineering, sogenanntem Reverse Engineering, analysiert werden, um einen darin enthaltenen Sicherheitsinformation zu ermitteln.

Es ist des Weiteren bekannt, eine Digitalschaltung so auszubilden, dass sie nur abhängig von einem Schlüssel korrekt funktioniert. Beispielsweise wird bei einem Zustandsautomaten nur bei Anliegen eines korrekten Schlüssels ein regulär funktionaler Modus aktiviert.

Um ein Auslesen des Schlüssels bzw. einen Hinweis auf den kryptographischen Schlüssel beim Programmieren eines programmierbaren Logikbauelementes zu erlangen, ist es ebenfalls bekannt, eine zustandsbehaftete Logikschaltung um eine Vielzahl nicht-funktionaler Zustände zu erweitern und einen Startzustand Bauelemente-individuell zu bestimmen. Nur der Designer der Schaltung kann eine Zustandsfolge konstruieren, die von dem Bauelemente-individuellen Startzustand zu einem Zustand führt, von dem ausgehend die erwartete Funktionalität er-ibracht wird.

Die verschiedenen bekannten Maßnahmen sind entweder nur auf bestimmte programmierbare Logikbausteine beschränkt oder bedürfen wiederum einen Schlüssel zur Aktivierung.

Es ist daher die Aufgabe der vorliegenden Erfindung, eine Sicherheitsinformation oder einen kryptographischen Schlüssel innerhalb eines programmierbaren Logikbauelements auf eine solche Art für eine kryptographische Berechnung verfügbar zu machen, so dass ein Auslesen des Schlüssels aus dem Bitstrom nur mit hohem Aufwand möglich ist. Insbesondere soll ein kryptographischer Schlüssel oder auch eine Sicherheitsinformation, welche sich auf den kryptographischen Schlüssel bezieht, nur schwer durch umgekehrtes Engineering, auch Reverse Engineering genannt, ermittelbar sein.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße programmierbare Logikbauelement ist derart programmiert, eine Schlüsselbildungsschaltung aufzuweisen, die eine Sicherheitsinformation, welche sich auf einen kryptographischen Schlüssel bezieht, zur Laufzeit erzeugt, und welche einer kryptographischen Einheit als Eingabeparameter bereitstellbar ist, wobei das Erzeugen der Sicherheitsinformation (K) unter Verwendung von Initialisierungsdaten, die im Bitstream enthalten sind, erfolgt.

Die kryptographische Einheit kann als Teil des programmierbaren Logikbauelements realisiert sein. Sie kann sich also auf demselben programmierbaren Logikbauelement befinden wie die Schlüsselbildungsschaltung. Grundsätzlich ist es jedoch auch möglich, dass ein gebildeter Schlüssel einer externen kryptographischen Einheit bereitgestellt wird.

Die Sicherheitsinformation kann beispielsweise eine Breite von 64 Bit, 128 Bit, 256 Bit, 384 Bit, 512 Bit aufweisen. Das Erzeugen umfasst zumindest eine logische Operation, die durch eine konfigurierbare Logikschaltung des Logikbauelements erbracht wird. Das Erzeugen der Sicherheitsinformation erfolgt vorzugsweise deterministisch mittels logischer Operationen und/oder Register. Weiterhin erfolgt das Erzeugen der Sicherheitsinformation vorzugsweise ohne Verwendung von Initialisierungsdaten, oder unter Verwendung von Initialisierungsdaten, die im Bitstream enthalten sind.

Ein entsprechendes programmierbares Logikbauelement kann beispielsweise eine feldprogrammierbare Gatter-Anordnung, auch FPGA genannt, sein. Die Schlüsselbildungsschaltung ist eine Funktionsstruktur, die durch Programmierung einzelner universeller Blöcke in dem programmierbaren Logikbauelement und deren Verschaltung untereinander festgelegt ist. Die erzeugte Sicherheitsinformation kann einerseits ein kryptographischer Schlüssel selbst sein oder aber ein Parameter oder eine Information, aus der durch weitere Verarbeitungsschritte der kryptographische Schlüssel erzeugt wird. Die Sicherheitsinformation wird erst zur Laufzeit des programmierbaren Logikbauelementes erzeugt, d.h. sobald an dem Logikbauelement Strom anliegt bzw. das Logikbauelement aktiviert wird.

Ein entsprechendes programmierbares Logikbauelement hat den Vorteil, dass eine Schlüsselbildungsschaltung relativ einfach realisierbar ist und nur geringe Ressourcen auf dem Logikbauelement benötigt. Dennoch kann selbst aus einem beim Angreifer vorliegenden Bitstrom bzw. einem entsprechenden Computerprogrammprodukt, das den Bitstrom enthält, ein darin erfindungsgemäß verborgener Schlüssel nur mit äußerst hohem Aufwand extrahiert werden. Dies liegt daran, dass die erzeugte Sicherheitsinformation nicht im Bitstrom direkt enthalten ist. Ein Angreifer müsste für einen erfolgreichen Angriff die logische Funktionalität ermitteln, die durch den Bitstrom realisiert wird. Dies ist nur mit äußerst hohem Aufwand möglich.

In einer vorteilhaften Ausführungsform umfasst die Schlüsselbildungsschaltung eine zustandslose Logikschaltung, die insbesondere als eine kombinatorische Logikschaltung ausgebildet.

Eine solche Schlüsselbildungsschaltung stellt eine Sicherheitsinformation innerhalb des Logikbauelementes z.B. in einem Verschlüsselungsblock oder Schlüsselableitungsblock bereit. Eine kombinatorische bzw. zustandslose Logikschaltung stellt die Schlüsselbildungsschaltung bei einer Aktivierung das Logikbauelement direkt bereit. Somit steht die Sicherheitsinformation sehr zeitnah nach dem Aktivieren des Logikbauelements zur weiteren Verwendung bereit.

In einer Variante des erfindungsgemäßen programmierbaren Logikbauelementes umfasst die Schlüsselbildungsschaltung eine zustandsbehaftete Logikschaltung.

Eine solche zustandsbehaftete Logikschaltung kann beispielsweise als Zustandsautomat realisiert sein. Dies hat den Vorteil, dass bei einer zustandsbehaften Logikschaltung ein Ausgabewert beispielsweise beim Eintreten bzw. beim Verlassen eines Zustands generiert wird. Es ist somit nicht direkt ein Initialisierungswert notwendig, der zum Starten bzw. zum Ausführen der Logikschaltung benötigt wird. Diese Information muss somit nicht bereitgestellt werden und erhöht somit die Sicherheit der erzeugten Sicherheitsinformation.

In einer vorteilhaften Ausführungsform umfasst die Schlüsselbildungsschaltung eine Kombination aus zustandslosen und zustandsbehafteten Logikschaltungen.

Durch eine Kombination aus zustandslosen und zustandsbehafteten Logikschaltungen kann die Schlüsselbildungsschaltung sehr flexibel an spezifische Anforderungen einer Anwendung angepasst werden.

In einem vorteilhaften Ausführungsbeispiel liegt ein Initialisierungswert der Schlüsselbildungsschaltung fest vorgegeben vor oder ein Initialisierungswert wird vor seiner Verwendung von der Schlüsselbildungsschaltung erst gebildet.

Liegt ein Initialisierungswert der Schlüsselbildungsschaltung fest vorgegeben vor, so kann die Sicherheitsinformation sehr schnell bereitgestellt werden. Wird ein Initialisierungswert vor seiner Verwendung in der Schlüsselbildungsschaltung erst zum Beispiel im Logikbauelement gebildet, so ist der Initialisierungswert nicht direkt im Bitstrom enthalten und somit auch nicht auslesbar.

In einem Ausführungsbeispiel ist die Schlüsselbildungsschaltung derart ausgebildet, die Sicherheitsinformation nur für eine vorbestimmte Zeitdauer und/oder nach einer bestimmten vorgegebenen Anzahl von Taktzyklen bereitzustellen.

Dies hat den Vorteil, dass unterschiedliche Sicherheitsinformationen zu verschiedenen Zeiten bzw. nach unterschiedlich vielen Taktzyklen ausgegeben werden können und somit mehrere Sicherheitsinformationen beispielsweise für unterschiedliche Anwendungen durch ein programmierbares Logikbauelement bereitgestellt werden können. Des Weiteren muss ein Angreifer den Zeitpunkt bzw. die Zeitdauer kennen um die Sicherheitsinformation abgreifen zu können.

In einer Ausführungsform des programmierbaren Logikbauelementes ist die Schlüsselbildungsschaltung derart ausgebildet, jeweils zu einer Zeit lediglich einen Teilbereich der Sicherheitsinformation zu erzeugen und auszugeben.

Dies hat den Vorteil, dass die vollständige Sicherheitsinformation zu keinem Zeitpunkt im Logikbauelement bzw. in der Schlüsselbildungsschaltung vorliegt. Dies ist insbesondere möglich, im Zusammenspiel mit beispielsweise einem AES-Algorithmus, dessen internes Schlüssel-Scheduling in einer Runde jeweils nur einen Teil des AES-Schlüssels verwendet.

In einer weiteren Variante ist die Schlüsselbildungsschaltung derart ausgebildet, unterschiedliche Teilbereiche der Sicherheitsinformation basierend auf unterschiedlichen Initialisierungswerten zu erzeugen.

Somit liegt zu keiner Zeit der vollständige Initialisierungswert zur Bildung der gesamten Sicherheitsinformation vor. Ein Angreifer muss erst die unterschiedlichen Initialisierungswerte für die Teilbereiche der Sicherheitsinformation erkennen und in der richtigen Reihenfolge anwenden, um die gesamte Sicherheitsinformation zu erhalten.

In einer vorteilhaften Ausführungsform ist die Schlüsselbildungsschaltung derart ausgebildet, die Sicherheitsinformation oder die Teilbereiche der Sicherheitsinformation durch einen Maskierungsparameter verändert auszugeben.

Dies hat den Vorteil, dass auch ein Auslesen des Ausgabewertes noch nicht die Sicherheitsinformation selbst oder Teilbereiche der Sicherheitsinformation selbst darstellen. Es sind weitere Demaskierungsschritte, d.h. die Verknüpfungsregeln zwischen Sicherheitsinformation und Maskierungsparameter, und die Kenntnis der Maskierungsparameter selbst notwendig, um die eigentliche Sicherheitsinformation zu erlangen. Als Maskierungsoperation kann z.B. eine Exklusiv-Oder-Verknüpfung, eine Additions-Operation oder eine Multiplikations-Operation verwendet werden.

In einer Variante des vorgenannten Logikbauelementes ist die Schlüsselbildungsschaltung derart ausgebildet, die Maskierungsparameter dynamisch zu ändern.

Dies erschwert erheblich eine Decodierung bzw. die Maskierung des Ausgabewertes der Schlüsselbildungsschaltung und somit das Erlangen der Sicherheitsinformation im Klartext.

In einer Variante wird die Schlüsselbildungsschaltung derart ausgebildet, die Sicherheitsinformation lediglich auf Anforderung zu erzeugen.

Dies hat den Vorteil, dass bei einem Reverse Engineering zusätzlich das eine Anforderung auslösende Signal erkannt werden muss.

In einer weiteren Variante ist die Schlüsselbildungsschaltung derart ausgebildet, eine Verfügbarkeitskennung dann bereitzustellen, wenn eine gültige Sicherheitsinformation zur Ausgabe bereitsteht.

Dies erschwert es ebenfalls, eine gültige Sicherheitsinformation als solche zu erkennen und auszulesen.

In einer vorteilhaften Ausführungsform ist die Schlüsselbildungsschaltung derart ausgebildet, zu verschiedenen Zeitpunkten verschiedene Sicherheitsinformationen für unterschiedliche Anwendungen bereitzustellen.

Dies hat den Vorteil, dass eine Vielzahl von Sicherheitsinformationen durch das gleiche Logikbauelement innerhalb kürzester Zeit bereitgestellt werden können.

In einer vorteilhaften Ausführungsform umfasst das programmierbare Logikbauelement zusätzlich eine kryptographische Einheit.

Damit kann auf dem gleichen Logikbauelement die Sicherheitsinformation eingesetzt und daraus ein Verschlüsselungsverfahren ausgeführt werden. Durch die Logikbauelement-interne Schnittstelle zur Übergabe der Sicherheitsinformation an das kryptographische Element ist ein Auslesen bzw. Abgreifen der Sicherheitsinformation äußerst schwierig.

In einer vorteilhaften Ausführungsform enthält der Bitstrom eine verborgene Wasserzeichen-Information, und die Schlüsselbildungsschaltung stellt die Wasserzeichen-Information nach einer Anzahl von Taktzyklen zur Bildung einer Sicherheitsinformation bereit.

Dies nutzt ein Wasserzeichen zur verschleierten Übertragung einer Sicherheitsinformation aus, und die Schlüsselbildungsschaltung wird lediglich zur Extraktion des Wasserzeichens aus dem Bitstrom verwendet.

Es wird des Weiteren eine Schlüsselbildungsschaltung zur Erzeugung und Bereitstellung einer Sicherheitsinformation, welche sich auf einem kryptographischen Schlüssel bezieht, beansprucht, die gemäß den vorgenannten Merkmalen des programmierbaren Logikbauelementes ausgebildet ist.

Es wird des Weiteren ein Verfahren zur Bereitstellung einer Sicherheitsinformation, welche sich auf einen kryptographischen Schlüssel bezieht, in einem programmierbaren Logikbauelement, dessen Logikschaltung durch einen Bitstrom programmiert wird und gemäß den vorgenannten Merkmalen ausgebildet ist, beansprucht. Das Verfahren umfasst als Verfahrensschritte ein Übertragen einer Schlüsselbildungsschaltung durch einen Bitstrom an das Logikbauelement, ein Erzeugen der Sicherheitsinformation mittels Ausführen der Schlüsselbildungsschaltung auf dem Logikbauelement und ein Bereitstellen der Sicherheitsinformation als Eingangsparameter für eine kryptographische Einheit, wobei das Erzeugen der Sicherheitsinformation (K) unter Verwendung von Initialisierungsdaten, die im Bitstream enthalten sind, erfolgt

Des Weiteren wird ein Computerprogrammprodukt beansprucht, das einen Bitstrom zum Laden auf ein programmierbares Logikbauelement erzeugt und der Bitstrom derart ausgebildet ist, eine Schlüsselbildungsschaltung, welche sich auf einen kryptographischen Schlüssel bezieht, gemäß den vorgenannten Merkmalen auf einem programmierbaren Logikbauelement zu konfigurieren.

Typischerweise wird einmal für jeden Einsatz der programmierbare Logikbaustein durch einen Bitstrom auf eine konkrete Funktion konfiguriert. Diese Funktion verliert das Logikbauelement jedoch wieder durch Abschalten der Betriebsspannung. Durch die Verwendung eines Computerprogrammprodukts, der insbesondere als ein löschbarer programmierbarer Nur-Lesespeicher (EEPROM) ausgebildet ist, kann auch der Bitstrom selbst aktualisiert werden.

Ausführungsbeispiele des erfindungsgemäßen programmierbaren Logikbauelementes, der Schlüsselbildungsschaltung und des Verfahrens zur Bereitstellung einer Sicherheitsinformation sind in den Zeichnungen beispielhaft dargestellt und werden anhand der nachfolgenden Beschreibung näher erläutert. Es zeigen:
- Figur 1: ein erstes Ausführungsbeispiel eines programmierbaren Logikbauelementes in schematischer Darstellung;
- Figur 2: ein Ausführungsbeispiel einer kombinatorischen Logikschaltung in Blockdarstellung;
- Figur 3: ein zweites Ausführungsbeispiel eines programmierbaren Logikbauelementes mit einer zustandsbehafteten Schlüsselbildungsschaltung in schematischer Darstellung;
- Figur 4: ein erstes Ausführungsbeispiel einer Schlüsselbildungsschaltung mit einer zustandsbehafteten Logikschaltung in Blockdarstellung;
- Figur 5: ein zweites Ausführungsbeispiel einer Schlüsselbildungsschaltung mit einer zustandslosen und zustandsbehafteten Logikschaltung in Blockdarstellung;
- Figur 6: ein drittes Ausführungsbeispiel einer Schlüsselbildungsschaltung mit zustandsbehafteten und zustandslosen Logikschaltungen und weiteren Registern in Blockdarstellung; und
- Figur 7: ein Ausführungsbeispiel des erfindungsgemäßen Verfahrens in Form eines Flussdiagramms.

Einander entsprechende Teile sind in allen Figuren mit den gleichen Bezugszeichen versehen.

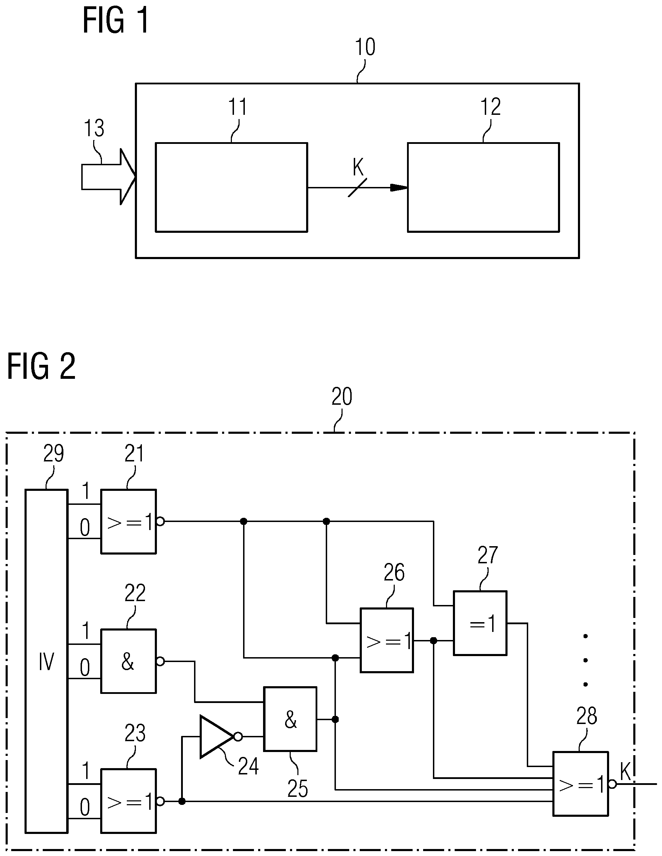

Figur 1 zeigt ein programmierbares Logikbauelement 10 mit einer Schlüsselbildungsschaltung 11, die hier in Form eines Schlüsselgenerierungsblocks ausgebildet ist, und durch einen Bitstrom 13 konfiguriert wird. Die Schlüsselbildungsschaltung 11 stellt einer kryptographischen Einheit 12, die hier auf dem gleichen Logikbauelement ausgebildet ist, eine Sicherheitsinformation K bereit, welche sich auf einen kryptographischen Schlüssel bezieht. Diese Sicherheitsinformation K kann beispielsweise ein vollständiger kryptographischer Schlüssel oder lediglich ein Teilbereich eines kryptographischen Schlüssels sein, der als Klartext oder aber durch einen Maskierungsparameter codiert ausgegeben und der kryptographischen Einheit 12 zur weiteren Verwendung bereitgestellt werden. Die Sicherheitsinformation K kann dabei z.B. als 128 Bitblock oder auch als 256 Bitblock bereitgestellt werden. Die Sicherheitsinformation K kann ebenso in Teilbereichen von beispielsweise 8 Bit, 16 Bit, 32 Bit oder 64 Bit bereitgestellt werden. Diese Teilbereiche werden dann entweder direkt von einer kryptographischen Einheit 12 zur Ausführung einer kryptographischen Funktion verwendet oder aber es werden mehrere Teilbereiche gesammelt und daraus eine komplette Sicherheitsinformation K bzw. ein vollständiger kryptographischer Schlüssel gebildet, der dann erst als Parameter in eine kryptographische Funktion eingeht.

Die Sicherheitsinformation K kann des Weiteren in maskierter Form bereitgestellt werden, indem beispielsweise die erzeugte Sicherheitsinformation K mit einem Maskierungsparameter beispielsweise durch eine ausschließliche ODER-Funktion (XOR) verknüpft wird und an den resultierenden Wert auf Maskierungsparameter angehängt wird. Der Maskierungsparameter kann beispielsweise durch einen Zufallszahlengenerator dynamisch erzeugt werden. Dies hat den Vorteil, dass beispielsweise Seitenkanalangriffe erschwert werden. Die Schlüsselbildungsfunktion 11 stellt die Sicherheitsinformation K in maskierter Form bereit.

Die Schlüsselbildungsfunktion kann insbesondere auf einem programmierbaren Logikbauelement, wie beispielsweise einer feldprogrammierbaren Gatter-Anordnung, auch FPGA-Baustein genannt, realisiert sein. Die Schlüsselbildungsschaltung 11 kann in Form eines Bitstroms auf das programmierbare Logikbauelement geladen werden, so dass innerhalb des LogikBauelementes zur Laufzeit die Sicherheitsinformation K durch eine Digital-Logik-Funktion gebildet wird. Dabei ist die gebildete Sicherheitsinformation K im Bitstrom nicht im Klartext enthalten und wird insbesondere auch nicht als ein Initialisierungswert von Speicherzellen oder Registern übertragen wird. Die Ausführung der Schlüsselbildungsfunktion zur Laufzeit bedeutet, dass die Funktion ausgeführt wird, sobald das Logikbauelement aktiviert ist, d.h. Strom anliegt bzw. durch bestimmte Signale die Ausführung der Schlüsselbildungsfunktion dediziert gestartet wird.

Die kryptographische Einheit 12 kann allgemein eine beliebige kryptographische Funktion realisieren, die die bereitgestellte Sicherheitsinformation K als Parameter verwendet. Die kryptographische Funktion 12 kann bevorzugt auf dem gleichen Logikbauelement 10 realisiert sein, so dass lediglich intern innerhalb des programmierbaren Logikbauelementes 10 die Sicherheitsinformation K von der Schlüsselbildungsfunktion 11 an die kryptographische Einheit 12 übergeben wird. Die kryptographische Einheit 12 kann beispielsweise auf Basis des erweiterten Verschlüsselungsstandards AES eine Verschlüsselung und/oder Entschlüsselung realisieren. Die kryptographische Einheit 12 kann auch zum Erzeugen oder zum Prüfen von kryptographischen Prüfsummen, beispielsweise eines verschlüsselten Nachrichtenauthentisierungscodes wie HMAC-SHA2, konfiguriert sein. Die kryptographische Einheit 11 kann aber auch eine Funktion zum Öffnen eines Schlüsselspeichers realisieren, so dass darin abgelegte Schlüssel zugreifbar sind. Des Weiteren kann die kryptographische Einheit 12 eine Authentisierungsfunktion oder eine Funktion zur Berechnung eines abgeleiteten Schlüssels ausführen.

Figur 2 zeigt nun ein Ausführungsbeispiel einer Schlüsselbildungsfunktion 20, die eine zustandslose Logikschaltung, bestehend aus mehreren Logikgattern 21 bis 28, sowie ein Register 29 umfasst. Diese reine kombinatorische Logikschaltung umfasst beispielsweise NOR-Gatter 21, 23, 26, 28, ein AND-Gatter 25 sowie ein XOR-Gatter 27. Das Register 29 stellt der kombinatorischen, d.h. zustandslosen Logikschaltung einen Initialisierungswert IV bereit. Durch die kombinatorische Logikschaltung wird ein Bit der Schlüsselinformation K gebildet. Das Register 29 des Initialisierungswertes IV enthält hier beispielsweise sechs Bits, es kann aber allgemein eine beliebige Anzahl von Bits umfassen. Allgemein kann der Initialisierungswert als Register oder als ein konstantes Signal realisiert sein.

Durch eine solche Schaltung können mehrere Bits der Sicherheitsinformation entsprechend gebildet werden. So können z.B. 128 derartige Schaltungen in einem Logikbauelement 10 vorgesehen sein, um eine Sicherheitsinformation K der Länge 128 Bits zu bilden.

In einer Variante der Schlüsselbildungsschaltung 20 können unterschiedliche Teilbereiche der Sicherheitsinformation K durch unterschiedliche Initialisierungswerte IV gebildet werden, nicht dargestellt. Dabei kann je Bit oder einer Gruppe von Bits der Sicherheitsinformation K ein eigener Initialisierungswert IV vorgesehen sein. Vorzugsweise wird jedoch ein gemeinsamer Initialisierungswert IV verwendet, um daraus alle Bits der Sicherheitsinformation und insbesondere des kryptographischen Schlüssels zu bestimmen.

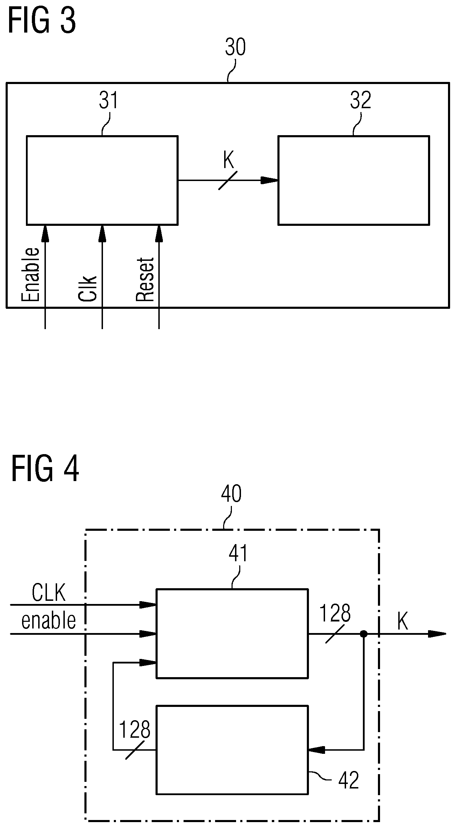

Figur 3 zeigt nun ein programmierbares Logikbauelement 30, das eine Schlüsselbildungsschaltung 31 aufweist, die eine zustandsgebundene Logikschaltung umfasst. Eine solche zustandsbehaftete Logikschaltung wird auch Zustandsautomat genannt und umfasst eine endliche Anzahl von Zuständen. An die Schlüsselbildungsschaltung 31 wird von extern ein Taktsignal CLK angelegt. Der Zustandsautomat führt beispielsweise bei jeder Flanke des Taktsignals CLK einen Zustandsübergang aus und geht in einen neuen Zustand über. Dadurch wird eine Sicherheitsinformation K bereitgestellt und einer kryptographischen Einheit 32 übergeben.

Die Sicherheitsinformation K kann dabei in einer Variante nur bereitgestellt werden, wenn ein Einschaltesignal Enable an der Schlüsselbildungsschaltung anliegt. In einer anderen Variante kann die Sicherheitsinformation K auch ausgehend von einem Zurücksetzungssignal Reset erzeugt und beispielsweise nur für eine gewisse Zeitdauer bereitgestellt werden. Beispielsweise ist die Schlüsselinformation K nur zwischen dem 100sten und 200sten Takt nach einem erfolgten ZurücksetzungsSignal Reset verfügbar.

Figur 4 zeigt nun ein Ausführungsbeispiel einer Schlüsselbildungsschaltung 40 mit einer zustandsbehafteten Logikschaltung. Diese zustandsbehaftete Schaltung bzw. dieser Zustandsautomat umfasst ein Zustandsregister 41 sowie ein Zustandsübergangselement 42. Darin kann z.B. über eine Übergangstabelle, die für jeden Eingangszustand beim Vorliegen verschiedener Bedingungen einen Endzustand definiert, der End- oder Ausgabezustand ermittelt werden, der wieder in das Zustandsregister 41 übergeben werden. In der Schlüsselbildungsschaltung 40 wird das Zustandsregister 41 des Zustandsautomaten direkt als Schlüsselregister verwendet. So wird nur eine minimale Registeranzahl benötigt und pro Takt können beispielsweise 128 Bits verarbeitet werden. Ausgehend von einem Initialwert, werden bei gesetztem Enable-Signal Übergänge auf die Registerdaten angewendet. Zu einem bestimmten Zeitpunkt enthält das Zustandsregister 41 die Sicherheitsinformation K. Durch Abschalten des Einschaltesignals Enable wird die Sicherheitsinformation K beliebig lange bereitgestellt und bei einem erneuten Setzen des Einschaltesignals Enable automatisch wieder überschrieben. Dies stellt eine besonders effiziente Implementierung, beispielsweise für einen 128 Bitschlüssel, dar.

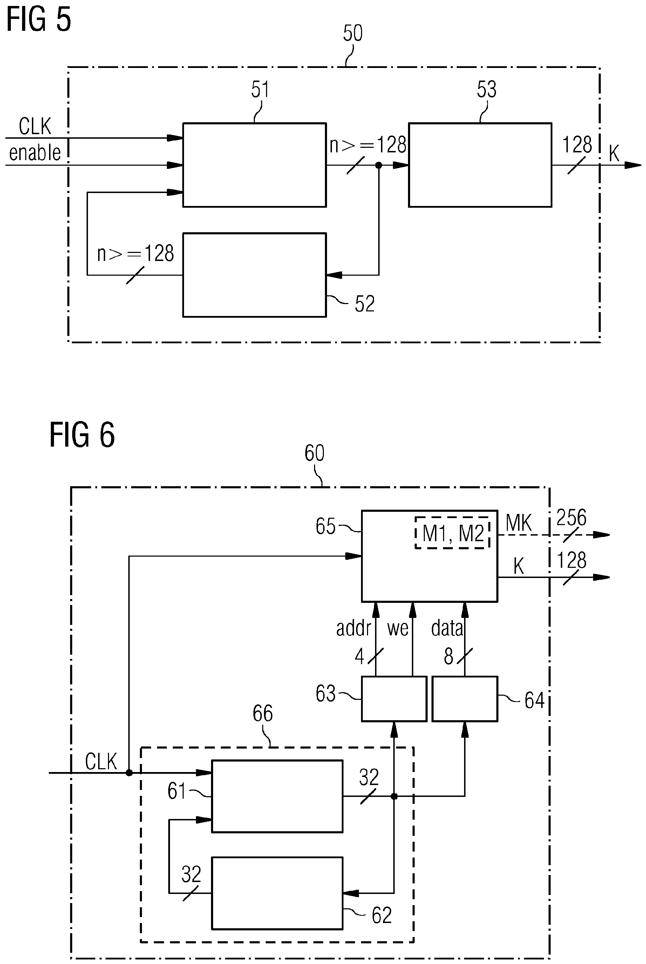

Figur 5 zeigt nun eine Variante der Schlüsselbildungsschaltung 40 aus Figur 4. Dabei wird eine, beispielsweise 128 Bit lange, Sicherheitsinformation K durch eine Bitfolge, die größer als 128 Bits ist, durch ein Zustandsregister 51 und ein Zustandsübergangselement 52 gebildet. Erst durch eine kombinatorische Logikschaltung 53, die eine Decodierung oder auch eine Demaskierung durchführt, entsteht die Sicherheitsinformation K in Klartext. Die Schlüsselbildungsschaltung 50 hat somit den Vorteil, dass die tatsächliche Sicherheitsinformation nie im Zustands- bzw. Schlüsselregister 51 vorliegt. Die Schlüsselbildungsschaltung 50 ist somit als eine Kombination aus einem zustandsbehafteten und einer zustandslosen Logikschaltung aufgebaut.

Figur 6 zeigt nun ein Ausführungsbeispiel einer Schlüsselbildungsschaltung 60, bei der eine zustandsbehaftete Logikschaltung 66 einen aus 32 Bit codierten Zustand realisiert. Die abgebildete zustandsbehaftete Logikschaltung 66 umfasst ein Zustandsregister 61 sowie ein Zustandsübergangselement 62, bei dem beispielsweise der Zustandsübergang zufällig generiert ist. Der durch das Zustandsübergangselement 62 geänderte Zustand bzw. Zustandswert wird wieder in das Zustandsregister eingetragen. Der aus dem Zustandsregister 61 ausgegebene Zustand, hier durch die Länge des Zustandswertes von 32 Bit mit 32 gekennzeichnet, wird beispielsweise decodiert, um ein Schlüsselregister 65 anzusteuern. Dem Schlüsselregister 65 wird eine Adressinformation addr, mit hier beispielsweise 4 Bit Länge, ein Schreibsignal we und ein Datenwort data von 8 Bit Länge bereitgestellt. Nach Durchlaufen einer gewissen Anzahl von Zuständen der zustandsbehaftete Logikschaltung 66 ist ein bestimmter Wert in das Schlüsselregister 65 geschrieben. Eine Sicherheitsinformation K liegt nach einer gewissen Anzahl von Taktzyklen vor.

Die Adressinformation sowie das Schreibsignal werden durch einen Schlüsseladress-Decoder 63 aus dem vom Zustandsautomaten 66 gelieferten Zustandswert erzeugt. Ein SchlüsselwertDecoder 64 ist dabei vorzugsweise eine kombinatorische Logikschaltung, die ausgehend von einem Initialisierungswert ein oder mehrere Bits einer Sicherheitsinformation K bzw. Teilbereiche der Sicherheitsinformation K bereitstellt. Der aktuelle Wert des Zustandsregisters 61 dient hierbei als Initialisierungswert. Auch der Schlüsseladress-Decoder 63 kann als eine solche kombinatorische, d.h. zustandslose Logikschaltung realisiert sein.

In einer Variante der Schlüsselbildungsschaltung 60 kann auch eine maskierte Sicherheitsinformation MK als Ausgabewert bereitgestellt werden, siehe gestrichelter Pfeil.

Dabei wird beispielsweise eine 128 Bit Sicherheitsinformation K als 256 Bit umfassende maskierte Sicherheitsinformation MK durch eine Konkatenation, d.h. eine Aneinanderreihung, eines ersten Maskierungswertes M1 und eines zweiten Maskierungswertes M2,
MK == M1 II M2
dargestellt, so dass z.B. für die demaskierte Sicherheitsinformation K
K==M1 XOR M2
gilt. Es kann eine maskierte Darstellung MK der Schlüsselinformation K deterministisch in das Schlüsselregister 65 geschrieben werden.

In einer anderen Ausführungsform kann zuerst ein zufällig maskierter Startwert, beispielsweise der Wert 0, in ein Schlüsselregister 65 geschrieben werden. Dazu kann eine Maske M1 zufällig bestimmt werden und eine Maske M2 als Inverse von M1 gebildet werden. Dieser Wert wird als Startwert in das Schlüsselregister 65 geschrieben, gestrichelt in Figur 6 dargestellt. Bei einem Schreibzugriff auf das Schlüsselregister 65 wird ein gespeicherter Zustandswert nicht überschrieben, sondern über eine exklusive OR-Funktion mit dem bereits Zustandswert verknüpft. Der als maskierte Sicherheitsinformation MK ausgegebene Zustandswert von hier beispielsweise 256 Bit wird dann einer kryptographischen Einheit bereitgestellt. Die Maskierungswerte M1 und M2 müssen dann ebenfalls der kryptographischen Einheit bekannt sein.

Die bereitgestellte Sicherheitsinformation K oder auch die maskierte Schlüsselinformation MK kann in späteren Taktzyklen überschrieben werden. Es ist aber auch möglich, dass nach dem Bereitstellen aller Bytes der Sicherheitsinformation K kein weiteres Überschreiben des Schlüsselregisters 65 erfolgt.

Weiterhin kann die Schlüsselbildungsschaltung eine Verfügbarkeitskennung, beispielsweise ein Valid-Signal, nicht dargestellt, dann bereitstellen, wenn eine gültige Sicherheitsinformation K, MK zur Ausgabe bereitsteht oder anzeigen, ob der aktuelle Wert des Schlüsselregisters 65 gültig ist. Ein Valid-Signal kann beispielsweise dann gesetzt werden, wenn jedes Byte der Sicherheitsinformation K, MK des Schlüsselregisters 65 zumindest einmal beschrieben wurde. Dazu kann im Schlüsselregister 65 zusätzlich für jedes Byte der Schlüsselinformation K ein Byte-Set-Register vorgesehen sein, das bei einem Schreibzugriff auf ein Register des Schlüsselregisters 65 gesetzt wird. Dieses gibt also an, ob das entsprechende Byte zumindest einmal beschrieben wurde. Das Enable-Signal ergibt sich dann als UND-Verknüpfung aller Byte-Set-Register.

Bei einem Schreibzugriff auf ein bereits geschriebenes Sicherheitsinformations-Byte kann der Wert ersetzt werden oder es kann der bereits gesetzte Wert erhalten bleiben. Ebenso ist es möglich, dass eine logische Verknüpfung des alten und des geschriebenen Wertes erfolgt, um den neuen Wert zu bestimmen. Dies kann z.B. eine XOR-Verknüpfung sein. Vorzugsweise erfolgt jedoch auch hier eine Verknüpfung durch eine kombinatorische Logikschaltung, wie sie im Schlüsseladressdecoder 63 bzw. im Schlüsselwertdecoder 64 beschrieben sind.

In einer Variante ist es auch möglich, zu unterschiedlichen Zeitpunkten unterschiedliche Sicherheitsinformationen bereitzustellen. Diese können für unterschiedliche Zwecke bzw. Anwendungen verwendet werden. Es ist jedoch insbesondere möglich, dass nur manche Sicherheitsinformationen tatsächlich verwendet werden.

Die Sicherheitsinformation K kann allgemein zu verschiedenen Zeiten bzw. während verschiedener charakteristischer Zeiträume durch eine der genannten Schlüsselbildungsschaltungen 11, 31, 40, 50, 60 bereitgestellt werden. So kann die Sicherheitsinformation K beispielsweise dauerhaft, nur während einer Initialisierungsphase, z.B. zwischen einem vorgegebenen Anfangsstartzyklus und einem vorgegebenen Endzyklus nach dem Start des Logikbauelementes bzw. der Rechenvorrichtung, in der das Logikbauelement implementiert ist, bereitstehen. Die Sicherheitsinformation K kann aber auch nur auf Anforderung, beispielsweise durch ein Anforderungssignals request erzeugt und bereitgestellt werden. Nach dem Anlegen des Anforderungssignals request kann die Sicherheitsinformation wiederum nur für eine vorgebbare Zeitdauer bereitstehen.

Die Sicherheitsinformation K kann aber auch nur zu bestimmten Zeitpunkten bzw. Zeiträumen bereitstehen bzw. bereitgestellt werden. Ein solcher Zeitraum kann z.B. durch ein keyValid-Signal angezeigt werden. Zu anderen Zeiten, wenn also das KeyValid-Signal den Wert voll aufweist, werden andere oder zufällige Werte ausgegeben. Es ist auch möglich, statt eines Valid-Signals einen keyValid-Signalvektor auszugeben. Eine separate Auswerteschaltung kann dann den keyValid-Signalvektor prüfen, um zu ermitteln, ob der aktuelle von der Schlüsselbildungsschaltung ausgegebene bzw. bereitgestellte Wert tatsächlich eine gültige Sicherheitsinformation darstellt.

In einer weiteren Variante kann ein Zustandsautomat bzw. eine zustandsbehaftete Logikschaltung eine Wasserzeichen-Information enthalten. Dadurch kann eine wählbare geheime Information in einem Zustandsautomaten verborgen werden. Anhand einer bestimmten Zustandsfolge kann beispielsweise Teilbereichen der Ausgabewertes des Zustandsautomaten die geheime Wasserzeichen-Information entnommen werden und in das Schlüsselregister geschrieben werden.

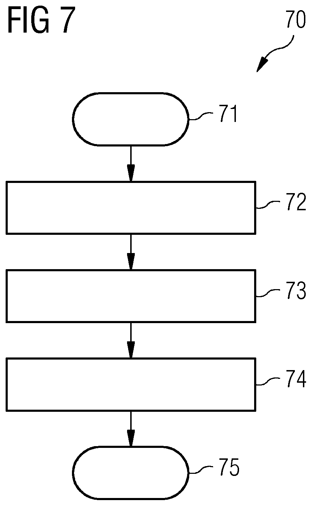

In Figur 7 ist ein Ausführungsbeispiel eines entsprechenden Verfahrens zur Bereitstellung einer Sicherheitsinformation, welche sich auf einen kryptographischen Schlüssel bezieht, in Form eines Flussdiagramms 70 beschrieben. Im Ausgangszustand 71 liegt ein programmierbares Logikbauelement, dessen Logikschaltung durch einen Bitstrom programmiert werden kann, vor. Dabei wird ein programmierbares Logikbauelement, dessen Logikschaltung durch einen Bitstrom programmiert wird, durch die genannten Verfahrensschritte modifiziert.

Der erste Verfahrensschritt ist das Übertragen 72 einer Schlüsselbildungsschaltung 11, 31 durch einen Bitstrom 13 auf das Logikbauelement 10, 30 aus Figur 1 bzw. Figur 3. Als nächster Schritt folgt das Erzeugen 73 der Sicherheitsinformation mittels Ausführen der Schlüsselbildungsschaltung 11, 31 auf dem Logikbauelement 10, 30 und anschließend das Bereitstellen 74 der Sicherheitsinformation K als Eingangsparameter für eine kryptographische Einheit 12, 32. Im nachfolgenden Endzustand 75 steht die Sicherheitsinformation K zumindest temporär zur Verfügung.

Die vorliegende Erfindung ist nicht auf die beschriebenen Merkmale und Ausführungsbeispiele beschränkt. Alle beschriebenen und/oder gezeichneten Merkmale können im Rahmen der Erfindung vorteilhaft miteinander kombiniert werden.

## Patentansprüche

1. Programmierbares Logikbauelement, das durch einen Bitstrom (13) konfiguriert wird, wobei eine Schlüsselbildungsschaltung (11, 31), die eine Sicherheitsinformation (K), welche sich auf einen kryptographischen Schlüssel bezieht, zur Laufzeit deterministisch erzeugt, durch den Bitstrom konfiguriert wird, wobei die Sicherheitsinformation (K) einer kryptographischen Einheit (12, 32) als Eingabeparameter bereitstellbar ist, und wobei das Erzeugen der Sicherheitsinformation (K) unter Verwendung von Initialisierungsdaten, die im Bitstrom enthalten sind, erfolgt.

2. Programmierbares Logikbauelement (10, 30) nach Anspruch 1, wobei die Schlüsselbildungsschaltung (20) eine zustandslose Logikschaltung, insbesondere eine kombinatorische Logikschaltung, umfasst.

3. Programmierbares Logikbauelement (10, 30) nach Anspruch 1, wobei die Schlüsselbildungsschaltung (30, 40, 50, 60) eine zustandsbehaftete Logikschaltung umfasst.

4. Programmierbares Logikbauelement (10, 30) nach Anspruch 2 oder 3, wobei die Schlüsselbildungsschaltung (50, 60) eine Kombination aus zustandslosen und zustandsbehafteten Logikschaltungen umfasst.

5. Programmierbares Logikbauelement (10, 30) nach einem der Ansprüche 1 bis 4, wobei ein Initialisierungswert (IV) der Schlüsselbildungsschaltung (20) fest vorgegeben vorliegt oder vor seiner Verwendung in der Schlüsselbildungsschaltung erst gebildet wird.

6. Programmierbares Logikbauelement (10, 30) nach einem der Ansprüche 1 bis 5, wobei die Schlüsselbildungsschaltung (11, 20, 31, 40, 50, 60) derart ausgebildet ist, die Sicherheitsinformation (K) nur für eine vorbestimmte Zeitdauer und/oder nach einer bestimmten vorgegebenen Anzahl von Taktzyklen bereitzustellen.

7. Programmierbares Logikbauelement (10, 30) nach einem der Ansprüche 1 bis 6, wobei die Schlüsselbildungsschaltung (11, 20, 31, 40, 50, 60) derart ausgebildet ist, jeweils zu einer Zeit lediglich ein Teilbereich der Sicherheitsinformation (K) zu erzeugen und auszugegeben.

8. Programmierbares Logikbauelement (10, 30) nach Anspruch 7, wobei die Schlüsselbildungsschaltung (11, 20, 31, 40, 50, 60) derart ausgebildet ist, unterschiedliche Teilbereiche der Sicherheitsinformation (K) basierend auf unterschiedlichen Initialisierungswerten (IV) zu erzeugen.

9. Programmierbares Logikbauelement (10, 30) nach einem der Ansprüche 1 bis 8, wobei die Schlüsselbildungsschaltung (60) derart ausgebildet ist, eine durch mindestens einen Maskierungsparameter (M1, M2) veränderte maskierte Sicherheitsinformation (MK) oder Teilbereiche einer maskierten Sicherheitsinformation (MK) auszugeben.

10. Programmierbares Logikbauelement (10, 30) nach Anspruch 9, wobei die Schlüsselbildungsschaltung (11, 20, 31, 40, 50, 60) derart ausgebildet ist den Maskierungsparameter dynamisch zu ändern.

11. Programmierbares Logikbauelement (10, 30) nach einem der Ansprüche 1 bis 10, wobei die Schlüsselbildungsschaltung (11, 20, 31, 40, 50, 60) derart ausgebildet ist, die Sicherheitsinformation (K) lediglich auf Anforderung zu erzeugen.

12. Programmierbares Logikbauelement (10, 30) nach Anspruch 11, wobei die Schlüsselbildungsschaltung (11, 20, 31, 40, 50, 60) derart ausgebildet ist, eine Verfügbarkeitskennung dann bereitzustellen, wenn eine gültige Sicherheitsinformation (K) zur Ausgabe bereitsteht.

13. Programmierbares Logikbauelement (10, 30) nach einem der Ansprüche 1 bis 12, wobei die Schlüsselbildungsschaltung (11, 20, 31, 40, 50, 60) derart ausgebildet ist, zu verschiedenen Zeitpunkten verschiedene Sicherheitsinformationen (K) für unterschiedliche Anwendungen bereitzustellen.

14. Programmierbares Logikbauelement (10, 30) nach einem der Ansprüche 1 bis 13, umfassend zusätzlich eine kryptographische Einheit (12, 32).

15. Programmierbares Logikbauelement (10, 30) nach einem der Ansprüche 1, 3 bis 14, wobei der Bitstrom (13) eine verborgene Wasserzeichen-Information enthält, und die zustandsbehaftete Logikschaltung die Wasserzeichen-Information nach einer Anzahl von Taktzyklen zur Bildung einer Sicherheitsinformation (K) bereitstellt.

16. Schlüsselbildungsschaltung zur Erzeugung und Bereitstellung einer Sicherheitsinformation (K), welche sich auf einen kryptographischen Schlüssel bezieht, die gemäß den Ansprüchen 1 bis 15 ausgebildet ist.

17. Verfahren zur Bereitstellung einer Sicherheitsinformation(K), welche sich auf einen kryptographischen Schlüssel bezieht, in einem programmierbaren Logikbauelement (10, 30), dessen Logikschaltungen durch einen Bitstrom (13) programmiert werden, mit den Schritten:
- Übertragen einer Schlüsselbildungsschaltung durch einen Bitstrom auf das Logikbauelement (10, 30),
- deterministisches Erzeugen der Sicherheitsinformation (K) mittels Ausführen der Schlüsselbildungsschaltung (11, 20, 31, 40, 50, 60) auf dem Logikbauelement (10, 30), und
- Bereitstellen der Sicherheitsinformation (K) als Eingangsparameter für eine kryptographische Einheit (12, 32), wobei das Erzeugen der Sicherheitsinformation (K) unter Verwendung von Initialisierungsdaten, die im Bitstrom enthalten sind, erfolgt.

18. Computerprogrammprodukt das einen Bitstrom (13) zum Laden auf ein programmierbares Logikbauelement (10, 30) erzeugt, und der Bitstrom (13) derart ausgebildet ist eine Schlüsselbildungsschaltung (11, 20, 31, 40, 50, 60), welche sich auf einen kryptographischen Schlüssel bezieht, gemäß den Ansprüchen 1 bis 15 auf einem programmierbaren Logikbauelement (10, 30) zu konfigurieren.

## Claims

1. Programmable logic component which is configured by means of a bit stream (13), wherein a key formation circuit (11, 31) which deterministically generates an item of security information (K) relating to a cryptographic key at the runtime is configured by means of the bit stream, wherein the security information (K) can be made available to a cryptographic unit (12, 32) as an input parameter, and wherein the security information (K) is generated using initialization data contained in the bit stream.

2. Programmable logic component (10, 30) according to Claim 1, wherein the key formation circuit (20) comprises a stateless logic circuit, in particular a combinational logic circuit.

3. Programmable logic component (10, 30) according to Claim 1, wherein the key formation circuit (30, 40, 50, 60) comprises a stateful logic circuit.

4. Programmable logic component (10, 30) according to Claim 2 or 3, wherein the key formation circuit (50, 60) comprises a combination of stateless and stateful logic circuits.

5. Programmable logic component (10, 30) according to one of Claims 1 to 4, wherein an initialization value (IV) is firmly predefined to the key formation circuit (20) or is only formed in the key formation circuit before its use.

6. Programmable logic component (10, 30) according to one of Claims 1 to 5, wherein the key formation circuit (11, 20, 31, 40, 50, 60) is designed to provide the security information (K) only for a predetermined period and/or after a particular predefined number of clock cycles.

7. Programmable logic component (10, 30) according to one of Claims 1 to 6, wherein the key formation circuit (11, 20, 31, 40, 50, 60) is designed to generate and output only a section of the security information (K) at a time in each case.

8. Programmable logic component (10, 30) according to Claim 7, wherein the key formation circuit (11, 20, 31, 40, 50, 60) is designed to generate different sections of the security information (K) on the basis of different initialization values (IV).

9. Programmable logic component (10, 30) according to one of Claims 1 to 8, wherein the key formation circuit (60) is designed to output an item of masked security information (MK) changed by means of at least one masking parameter (M1, M2) or sections of an item of masked security information (MK).

10. Programmable logic component (10, 30) according to Claim 9, wherein the key formation circuit (11, 20, 31, 40, 50, 60) is designed to dynamically change the masking parameter.

11. Programmable logic component (10, 30) according to one of Claims 1 to 10, wherein the key formation circuit (11, 20, 31, 40, 50, 60) is designed to generate the security information (K) only on request.

12. Programmable logic component (10, 30) according to Claim 11, wherein the key formation circuit (11, 20, 31, 40, 50, 60) is designed to provide an availability identifier when an item of valid security information (K) is available for output.

13. Programmable logic component (10, 30) according to one of Claims 1 to 12, wherein the key formation circuit (11, 20, 31, 40, 50, 60) is designed to provide different items of security information (K) for different applications at different times.

14. Programmable logic component (10, 30) according to one of Claims 1 to 13, additionally comprising a cryptographic unit (12, 32).

15. Programmable logic component (10, 30) according to one of Claims 1, 3 to 14, wherein the bit stream (13) contains an item of hidden watermark information, and the stateful logic circuit provides the watermark information after a number of clock cycles for the purpose of forming an item of security information (K).

16. Key formation circuit for generating and providing an item of security information (K) relating to a cryptographic key, which circuit is designed according to Claims 1 to 15.

17. Method for providing an item of security information (K) relating to a cryptographic key in a programmable logic component (10, 30), the logic circuits of which are programmed by means of a bit stream (13), having the steps of:
- transmitting a key formation circuit to the logic component (10, 30) by means of a bit stream,
- deterministically generating the security information (K) by executing the key formation circuit (11, 20, 31, 40, 50, 60) on the logic component (10, 30), and
- providing the security information (K) as an input parameter for a cryptographic unit (12, 32), wherein the security information (K) is generated using initialization data contained in the bit stream.

18. Computer program product which generates a bit stream (13) for loading onto a programmable logic component (10, 30), wherein the bit stream (13) is designed to configure a key formation circuit (11, 20, 31, 40, 50, 60) relating to a cryptographic key according to Claims 1 to 15 on a programmable logic component (10, 30).

## Revendications

1. Composant logique programmable qui est configuré par un train de bits (13), dans lequel un circuit de formation de clé (11, 31) qui produit de façon déterministe par rapport à la durée de validité, une information de sécurité (K) qui se rapporte à une clé cryptographique, est configuré pour le train de bits, dans lequel l'information de sécurité (K) peut être fournie en tant que paramètre de saisie à une unité cryptographique (12, 32), et dans lequel la production de l'information de sécurité (K) s'effectue en employant des données d'initialisation qui sont contenues dans le train de bits.

2. Composant logique programmable (10, 30) selon la revendication 1, dans lequel le circuit de formation de clé (20) comprend un circuit logique sans état, en particulier un circuit logique combinatoire.

3. Composant logique programmable (10, 30) selon la revendication 1, dans lequel le circuit de formation de clé (30, 40, 50, 60) comprend un circuit logique à état.

4. Composant logique programmable (10, 30) selon la revendication 2 ou 3, dans lequel le circuit de formation de clé (50, 60) comprend une combinaison de circuits logiques sans état et à état.

5. Composant logique programmable (10, 30) selon l'une des revendications 1 à 4, dans lequel une valeur d'initialisation (IV) du circuit de formation de clé (20) est présente déjà définie ou est formée uniquement avant son emploi dans le circuit de formation de clé.

6. Composant logique programmable (10, 30) selon l'une des revendications 1 à 5, dans lequel le circuit de formation de clé (11, 20, 31, 40, 50, 60) est conçu pour fournir l'information de sécurité (K) uniquement pendant une durée prédéterminée et/ou après un nombre prédéfini de cycles d'horloge.

7. Composant logique programmable (10, 30) selon l'une des revendications 1 à 6, dans lequel le circuit de formation de clé (11, 20, 31, 40, 50, 60) est conçu pour produire et émettre uniquement une partie de l'information de sécurité (K) à un moment respectif.

8. Composant logique programmable (10, 30) selon la revendication 7, dans lequel le circuit de formation de clé (11, 20, 31, 40, 50, 60) est conçu pour produire différentes parties de l'information de sécurité (K) en se basant sur différentes valeurs d'initialisation (IV).

9. Composant logique programmable (10, 30) selon l'une des revendications 1 à 8, dans lequel le circuit de formation de clé (60) est conçu pour émettre une information de sécurité (MK) masquée modifiée par au moins un paramètre de masquage (M1, M2) ou des parties d'une information de sécurité (MK) masquée.

10. Composant logique programmable (10, 30) selon la revendication 9, dans lequel le circuit de formation de clé (11, 20, 31, 40, 50, 60) est conçu pour modifier le paramètre de masquage de façon dynamique.

11. Composant logique programmable (10, 30) selon l'une des revendications 1 à 10, dans lequel le circuit de formation de clé (11, 20, 31, 40, 50, 60) est conçu pour produire l'information de sécurité (K) uniquement sur demande.

12. Composant logique programmable (10, 30) selon la revendication 11, dans lequel le circuit de formation de clé (11, 20, 31, 40, 50, 60) est conçu pour fournir un identificateur de disponibilité uniquement lorsqu'une information de sécurité (K) valable est prête à être émise.

13. Composant logique programmable (10, 30) selon l'une des revendications 1 à 12, dans lequel le circuit de formation de clé (11, 20, 31, 40, 50, 60) est conçu pour fournir à différents moments, différentes informations de sécurité (K) pour différentes applications.

14. Composant logique programmable (10, 30) selon l'une des revendications 1 à 13, comprenant en outre une unité cryptographique (12, 32).

15. Composant logique programmable (10, 30) selon l'une des revendications 1, 3 à 14, dans lequel le train de bits (13) contient une information en filigrane cachée, et le circuit logique à état fournit l'information en filigrane après un nombre de cycles d'horloge pour former une information de sécurité (K).

16. Circuit de formation de clé pour produire et fournir une information de sécurité (K) qui se rapporte à une clé cryptographique qui est formée selon les revendications 1 à 15.

17. Procédé de fourniture d'une information de sécurité (K) qui se rapporte à une clé cryptographique, dans un composant logique programmable (10, 30), dont les circuits logiques sont programmés par un train de bits (13), comprenant les étapes :
- de transmission d'un circuit de formation de clé au composant logiciel programmable (10, 30) par un train de bits,
- de production déterministe de l'information de sécurité (K) par l'exécution du circuit de formation de clé (11, 20, 31, 40, 50, 60) sur le composant logique programmable (10, 30), et
- de fourniture de l'information de sécurité (K) en tant que paramètre d'entrée pour une unité cryptographique (12, 32), dans lequel la production de l'information de sécurité (K) s'effectue en employant des données d'initialisation qui sont contenues dans le train de bits.

18. Produit de programme informatique qui produit un train de bits (13) pour le chargement sur un composant logique programmable (10, 30), et le train de bits (13) est conçu pour configurer un circuit de formation de clé (11, 20, 31, 40, 50, 60) qui se rapporte à une clé cryptographique, selon les revendications 1 à 15, sur un composant logique programmable (10, 30).
